# EUROPEAN PATENT APPLICATION

(11) **EP 4 329 066 A1**
(43) Date of publication of application: **28.02.2024**
(21) Application number: 23169625.3
(22) Date of filing: 24.04.2023
(51) Int. Cl.: H01M 50/249, B60L 50/64, H01M 50/258, H01M 50/262, F16B 23/00

(54) **SCREW FOR BATTERY CASE FOR A VEHICLE AND ASSEMBLY OF VEHICLE BATTERY CASE PLUS ONE OR MORE SCREWS**

(30) Priority: 25.04.2022 ES 202230371
(71) Applicant: Defta, 77700 Chessy (FR)
(72) Inventor: VERASTEGUI JURADO, David Miguel, CHESSY (FR); CARDARELLI, Piero, CHESSY (FR)
(74) Representative: Ponti & Partners, S.L.P

(57) **Abstract**

Screw (15) comprising an intermediate portion (18) arranged in the lower part of the body (16) of the screw (15), where the lower part of the intermediate portion (18) contacts the upper part of the head (17) of the screw, and where the outer lateral surface of the intermediate portion (18) is configured to contact a part of the inner surface of the space provided in a surface (3) of a case (1); and where the head (17) of the screw (15) is a widened head, of greater width than the intermediate portion (18 ) and where said widened head (17) comprises a plurality of grooves in its outer lateral surface to contact another part of the space of the case (1).

## Description

### Object of the Invention

The present patent application concerns, firstly, an improved screw suitable to be tightly inserted into a respective opening or space provided in a battery case for a vehicle, where one or more such screws serve to fix an external component in or on an upper surface of the case.

Secondly, this invention relates to an assembly formed by a battery case for a vehicle and by one or more screws, which incorporates notable innovations and advantages with respect to currently known cases and screws.

### Background of the invention

Today the batteries for an electric or hybrid vehicle are constituted by different elements, which are arranged inside an essentially hollow case which is closed above by an upper lid. Said case plus lid assembly, which must necessarily be fully watertight, is referred to in the jargon as a battery compartment or case.

Generally, battery cases are manufactured from a rigid sheet of low thickness, generally a metal sheet of substantially flat configuration, although it can present roughnesses. It usually has a continuous body formed by a lower surface of substantially rectangular contour, although the configuration thereof may vary depending on the battery model, and side surfaces that extend in a substantially perpendicular direction from the lower surface.

A common manufacturing process currently for such a battery case is by stamping or drawing.

The battery cases may additionally have one or more openings or through holes arranged in specific positions other than their lower surface, so that respective external parts can pass through and/or be inserted into the same and be fixed by means of fasteners in the case. In particular, some models of battery cases incorporate an opening to place external elements such as supports or the so-called "Fireman Access" (FA), which is a watertight fuse that allows firefighters to introduce water into the battery compartment in the event of high temperatures or even fire. In the vicinity of said opening respective spaces are arranged for inserting screws to fix said external component to the case surface. Additionally, some models of cases have a peripheral lip with a plurality of holes distributed along same, said plurality of holes configured to fix the lid to the lower case forming a watertight assembly.

The present invention focuses on the models of battery cases that incorporate, at least, in a lower or lateral surface of said case an opening or location for placing an external component, where said external component is placed partially or totally inserted in said opening or location and the external component is fixed by means of one or more fixing elements, such as one or more screws. By way of example, two or four identical screws may be provided in the vicinity of the opening or location where the outer component is placed, and wherein each screw is configured to be tightly inserted into a respective hole or space of the case intended for such purpose.

The outer element must necessarily be mounted on the screw from the top. Therefore, it is necessary to provide a respective hole in the case of the battery to receive a head of the screw, since the head of each screw is arranged resting on and flush against the lower surface of the battery case and, at the same time, guaranteeing the tightness of the union.

The screws known today suitable for this type of assembly with a very high degree of tightness to be mounted on battery cases consist of the following parts:
- an elongate body extending according to a longitudinal direction, which is threaded on its external surface, configured to fix to an external component of the battery, and wherein in the mounting position it is arranged on the side corresponding to the upper face of the case,
- a head, at one end of the body, configured to be arranged in mounting position abutting against the underside of the surface of the case.

This type of screw is permanently fixed to the lower face of the case by means of an attachment means. The union means known today are a type of adhesives and welding.

It has been found that the application of a weld is not an optimal solution for this type of assembly, especially if they are to be welded to thin sheets, since it produces perforations and deformations in the sheet of the case, which causes numerous undesired tightness failures.

Solutions known today which use an adhesive to fix the top of the screw head to the bottom face of a case surface present a number of drawbacks, such as that the attachment of the top surface of said screw head to a case surface is not entirely efficient and does not provide adequate tightness.

Moreover, it is sought that the screws when placed inside the respective holes or spaces made in the case and are adhered have a power of adhesion/fixation such that they fall when receiving a strong impact, but remain fixed without detaching from the case during its "normal" use or handling. This seeks the object of preventing screws from being mounted improperly, therefore, not guaranteeing the tightness of the joint.

Finally, there is another problem associated with the battery case with this type of screw, which is that when the former has a very low thicknesses, on the order of about 0.8 mm, the screw that is inserted in each respective hole of the case through the lower face of the plate until it abuts against the lower face of the case cannot be adequately fixed to the lower face of the plate, precisely due to this small thickness. Due to this, the fixing of each screw by means of an adhesive to the lower face of this type of thin sheets provided with respective holes is not well resolved in the prior art.

For the reasons set forth above, there is a need in the market for improving the fastening screw for a battery case as well as the fastening assembly formed by one or more screws and the battery case.

### Description of the invention

The first object of the present invention is to provide a screw for battery cases, wherein said batteries are preferably used in a vehicle, and wherein the screw is suitable to be inserted, in a tight manner, in a space provided on the surface of a battery case and serves to fix an external component in or on the battery case, and which solves the aforementioned drawbacks, presenting the advantages described below.

According to this first object, the present invention provides a battery case screw for a vehicle, where the screw is suitable to be inserted tightly in a space provided on a surface of a battery case, wherein the screw comprises the following known features:
- an elongate body extending in a longitudinal direction, and
- a head arranged at the lower end of the body,

wherein the screw is configured to attach to an external component on the case or on the surface thereof, and wherein the body is configured to enter the space provided on one surface of a battery case such that the screw body is arranged on the upper face of the surface of the case and the screw head is arranged on the other lower face of the surface of the case, and
wherein the screw head is configured to be fixedly attached to the underside of the case surface.

Unlike the screws already known in the state of the art for battery cases preferably used in vehicles, the screw of the present invention is characterized by further comprising:
- an intermediate portion arranged in the lower portion of the screw body that is joined the upper portion of the screw head, wherein the outer side surface of the intermediate portion is configured to contact a portion of the inner surface of the case space; and
- wherein the head of the screw is a widened head, of greater width than the intermediate portion and wherein said widened head comprises a plurality of grooves in its outer lateral surface for contacting another portion of space provided in a surface of a case.

Advantageously, said plurality of grooves provided on the outer lateral surface of the screw head are configured to interlock against the lateral bases of the space or hole of the case, in order to increase the friction between both pieces but without breaking the lateral bases of the space or hole of the case or any other part of the case when exerting a
longitudinal force to insert the screw into the hole with a corresponding tool.

Preferably, the intermediate portion comprises a plurality of grooves in its outer side surface, said plurality of grooves configured to contact a portion of the inner surface of the space provided in a surface of a case.

Also preferably, the intermediate portion has a slightly greater width than the rest of the screw body.

Also preferably, the intermediate portion has a prismatic or cylindrical configuration. This prism can be square, rectangular, hexagonal or any other geometric shape. If the intermediate portion has a prismatic body, the grooves of the external surface are not essential, since a square or hexagonal shape, etc. guarantees achieving the resistant rotation torque by means of the side walls.

According to a possible embodiment of the invention, the intermediate portion of the screw has a height comprised between 0.5 and 3 mm and a width or diameter greater than the gauge of the screw body.

According to a possible embodiment of the invention, the plurality of grooves provided on the outer side surface of the intermediate portion extend regularly according to the longitudinal direction, wherein said longitudinal direction is the axial direction of the screw body.

According to a possible embodiment of the invention, the plurality of grooves provided on the outer lateral surface of the intermediate portion comprises a plurality of grooves and interleaved peaks in a zigzag shape and preferably with a triangular cross-section.

In particular reference to the widened head of the screw, it preferably has a width between 1.1 and 2.5 times greater than the gauge of the screw that is located above the head and conforms to the needs of the piece depending on the outer diameter of the head.

According to one possible embodiment of the invention, the enlarged head has a cylindrical body of diameter comprised between 12 and 18 mm, these values not being limiting.

According to a possible embodiment of the invention, the plurality of grooves provided on the outer side surface of the widened head of the screw extend along the longitudinal direction. Preferably, said plurality of grooves of the widened head of the screw comprises a plurality of grooves and peaks interleaved in a zigzag manner. The shape of these zigzags can be defined by the Spline RAA1-DIN82 standard or any other recognized standard, or even according to a specification for a particular case. Preferably, the plurality of grooves and interleaved peaks has a right triangular shaped profile. Preferably, the plurality of grooves occupies the entire outer surface of the grooved portion.

With reference to the screw body in particular, according to a possible embodiment, the screw body has a cylindrical or prismatic configuration. Preferably, the body has a width or diameter between 4 and 8 mm. Therefore, the enlarged head has a width or diameter that is at least twice the gauge of the screw body. Preferably, the threaded outer surface portion of the screw body comprises a part or the entirety thereof.

Optionally, between the body and the intermediate portion of the screw it comprises a frustoconical portion. By way of example, this frustoconical portion has a height between 1.4 and 2.4 mm. The function of this frustoconical portion is to allow mass manufacture of the screw with commonly used means and tools.

The second object of the present invention is to provide an assembly formed by a lid and/or battery case plus one or more screws, wherein said batteries are preferably used in a vehicle, and wherein the one or more screws are suitable to be inserted tightly in a respective space provided on the surface of a battery case and serve to fix an external component in or on the battery case, and wherein the assembly solves the aforementioned drawbacks, presenting the advantages described below.

According to this second object, the present invention provides a vehicle battery case assembly plus one or more screws, wherein the one or more screws are of the type defined above, and wherein the assembly comprises the following known feature:
- a lid and/or battery case, comprising a surface, provided with a top face and a bottom face opposite the top face;
- one or more screws as defined above, for fixing an external component in or on the upper face of the surface of the case; and
- means for joining at least the upper surface of the head of the screw, corresponding to the surface which is closest to the elongate body, to the lower face of the surface of the case.

The external component to be fixed with one or more screws in or on the upper face of the surface of the case can, for example, be an element referred to as "Fireman Access" (FA), although it can be used for fixing any support and/or system that must be attached to the case, both on an upper surface and on a side surface of the case.

Unlike the case and screw assemblies already known in the prior art for a battery preferably for use in vehicles, that of the present invention is characterized, in addition to the novel features of the screw set forth above, by further comprising:
- one or more spaces, where each space is for a respective screw, and where each space comprises a protruding portion that extends towards the area corresponding to the upper surface of the cover and/or case, where each protruding portion comprises a perimeter wall that extends towards the area corresponding to the upper surface leaving a lower opening and where the perimeter wall comprises a first ascending area and a second upper area that ends in an upper through opening arranged in a central position of the protruding portion; and where the upper mouth has a diameter such as to receive, in a tight manner, a part of the intermediate portion of the screw, so that the body of the screw is arranged and fixed protruding through the upper area of the case and the head of the screw is fixed against the upper surface of the case and the head is fixed to said lower face by means of an attachment means.

The case proposed by this present invention provides the following main advantages:
- Ensuring the tightness of the union.
- Eliminating risks of perforations.
- Guaranteeing a resistant torque of the joint sufficient to allow the mounting and tightening of the fixing nuts of the "Fireman Access" external element, supports or any auxiliary element that the vehicle needs.
- Acting as a safety fuse against improper handling or impacts that may partially deteriorate the joint allowing its use, but without guarantee of tightness.
- Connecting the cap-screw assembly by means of relatively low pressure systems and with easy and safe quality control of the connection.
- Creating a smooth lower surface without protrusions that take up space inside the battery hindering the positioning of all its elements.

The battery case comprises a body formed by a sheet consisting of at least one upper surface and lateral surfaces, wherein at least the upper surface or one of the lateral surfaces is the surface to be crossed by one or more screws.

Thus, in the case there may be a single protruding portion for a single screw or a plurality of sets of through protruding portions, each of which is arranged in a different specific position within the sheet to receive a respective screw, depending on the type of external component to be fixed on the upper face of the battery case. By way of example, there may be 2, 4 or 6 sets of projecting portions for 2, 4 or 6 respective fixing screws for an external component on or in the case.

Preferably, the upper and lower surfaces of the sheet forming the case are substantially flat and extend according to a direction transverse to the longitudinal direction (i.e. to the axial direction) of the screw body. The case may have some roughness at different points on its surface, as well as one or more openings for respective external components, depending on the specific model of case.

In this application, the term sheet is understood to mean a flat and thin piece of any material. Preferably, the sheet and the one or more protruding portions thereof are made of a metal sheet of a small thickness, preferably between 0.5 and 3.5 mm. In such case, the method of manufacturing said one or more protruding portions is preferably by stamping the metal sheet itself.

Preferably, the upper opening of the one protruding portion of the case has a circular configuration. The diameter and shape of the upper opening of the protruding portion is defined as a function of the gauge of the screw, so that said diameter will be slightly greater than the diameter of the gauge of the screw, and thus part of the intermediate portion of the screw is arranged inside said upper mouth in an tight manner. In the case where the intermediate portion is cylindrical, the upper opening of the protruding portion will be circular.

With reference to the configuration of each lower opening, it preferably has a circular configuration with a diameter comprised between 6 and 18 mm, depending on the metric of the screw, for example, gauges 5, 6, 7, etc. It can also be larger than 18.

Preferably, the wall of the protruding portion of the one protruding portion of the case continuously extends upwards.

Preferably, the second upper region is flat and lies on a plane parallel to the plane of the case sheet.

According to a possible embodiment of the invention, the first rising zone of the wall of a protruding portion of the case comprises the following zones:
- a first perimeter transition zone, in which there is a change in curvature of the perimeter wall extending from a direction parallel to the X-Y plane of the sheet surface to a direction Z orthogonal to said X-Y plane,
- optionally, a second central zone wherein at least a portion of said central zone is formed by a wall extending in the orthogonal direction Z, and
- a third perimeter transition zone, in which there is a change of curvature of the wall from the end of the first or second transition
zone to a direction parallel to the X-Y plane, continuing with a length of horizontal wall that ends in the upper opening.

Alternatively, there may be no intermediate vertical zone, only a first transition zone directly joined to a third transition zone. In such case, the screw head preferably has a conical shape.

In a possible embodiment of a protruding portion of the case, the lower transition zone and the third upper transition zone of the case are formed by a corresponding curved wall, with a radius of curvature adjusted to the manufacturing needs of the material used.

Preferably, the perimeter wall of the one or more protruding portions of the sheet have the same thickness as the rest of the sheet forming the case, or with a minimum constriction thereof due to the stamping or embossing process and the material used.

In a first embodiment of the invention, the thickness of the case sheet and the walls of the one or more protruding portions is comprised between 0.5 and 1 mm. Preferably, said thickness is selected around the value 0.8mm.

In a second embodiment of the invention, alternative to the first embodiment of the previous paragraph, the sheet of the case has a thickness equal to or greater than 1.5 mm. For these upper sheet thicknesses the sheet plate is preferably made of steel or aluminum.

Again with reference to the configuration of each projecting portion, preferably, its total height relative to the upper surface of the sheet is comprised between 1 and 2 mm, although it can become more than 2 mm.

Within this range of values, a height of about 1.5 mm is chosen as most preferred.

Again with reference to the configuration of each protruding portion, its inner surface is preferably smooth. Advantageously, said smooth inner surface is configured to receive an intermediate portion of a respective screw, so that the screw is arranged interlocked in the position that is arranged and held by the attachment means consisting of adhesive and nailing of both surfaces of the screw to the protruding portion.

Preferably, the attachment means of the upper surface of the head of the screw to a surface of the case is an adhesive material arranged on at least a part of the outer surface of the toothed portion and on a part of the upper surface of the head corresponding to the area closest to the toothed portion, wherein the adhesive is configured to adhere the upper surface of the head to a face of the case with a removal force such that the attachment is strong enough to maintain the attachment of both parts, but at the same time not too strong to be totally fixed. In this way, if the screw is hit it will fall, preventing the case from being reused as it could lose the tightness.

By way of example, such a bonding means may be a water-based adhesive, such as 3M^{™} Thread Sealant 4291 or 3M^{™} Fastener Adhesive 2353. 3M^{™} Thread Sealant 4291 is a water-based adhesive product. 3M^{™} 2353 is a microencapsulated adhesive, cured at ambient temperature.

To better understand the description made a set of drawings has been provided which, schematically and solely by way of a non-limiting example, show a practical example of embodiment of this invention.

### Brief description of the drawings

Figure 1 is a perspective view of the bottom of a battery case according to the present invention, where on the bottom surface of said battery case two fixing screws according to the present invention have been inserted in the vicinity of an opening for an outer component,
Figure 2 is a view of detail A of figure 1, where a perspective of the fixing screw inserted into the bottom surface of the case is seen in greater detail.
Figure 3 is a front elevation view of a possible embodiment of the fixing screw according to the present invention.
Figure 4 is a sectional view along the line B-B according to figure 3.
Figure 5 is a view of a detail of figure 3 corresponding to a lower part of the screw, wherein the adhesive layer is represented.
Figure 6 is a cross-sectional front elevation view of a portion of the bottom surface of the battery case.
Figure 7 is a bottom perspective view of the mounting assembly of a part of a surface of a battery case and a fixing screw inserted into a space provided in said surface of the case.
Figure 8 is a lateral elevation view of the mounting assembly of figure 7.
Figure 9 is an upper plan view of the mounting assembly of figures 7 and 8.
Figure 10 is a cross-sectional top perspective view of the mounting assembly shown in figures 7 to 9.
Figure 11 is a cross-sectional front elevation view of the mounting assembly shown in figures 7 to 10.
Figure 12 is a exploded view of the of the mounting assembly shown in figures 7 to 11.

### Description of some examples of embodiment of the invention

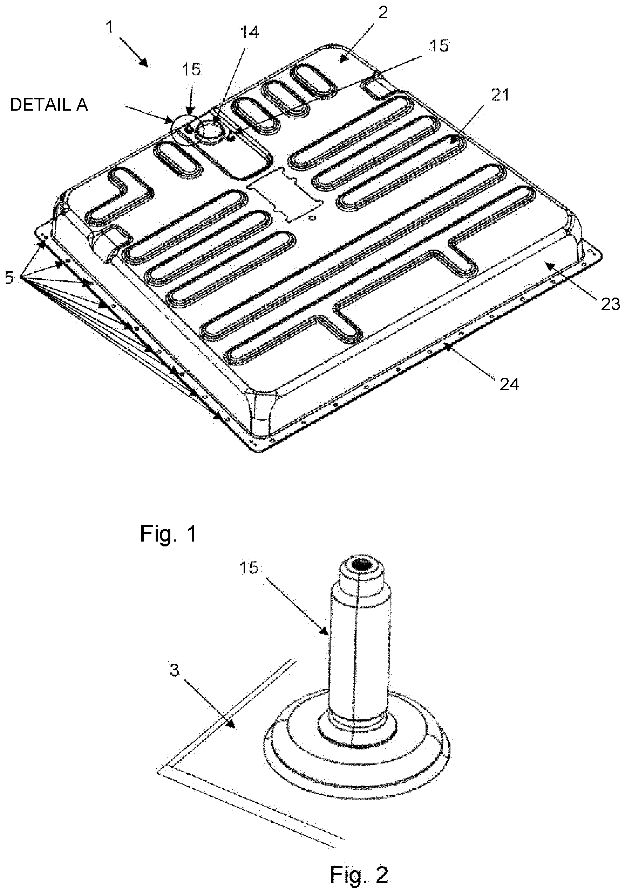

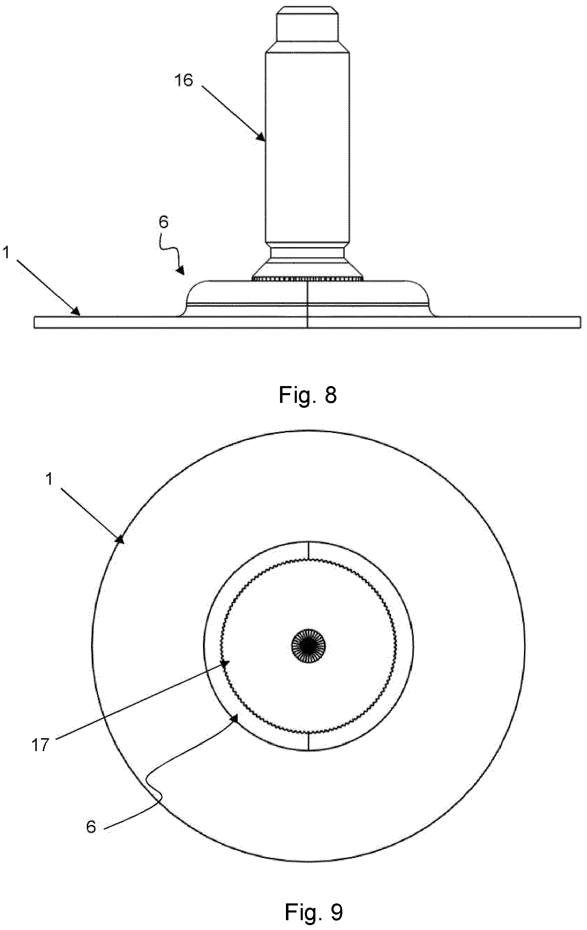

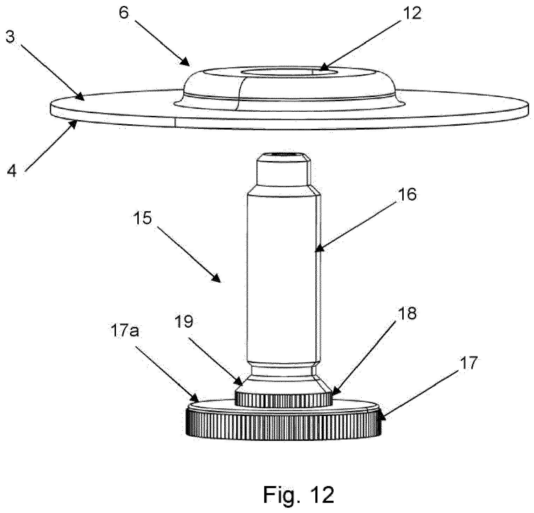

A preferred embodiment of a battery case 1 for a vehicle object of the present invention with one or more fixing screws 15 for an external component (not shown in the attached figures) is described below, with reference to figures 1 to 12.

The outer casing of a battery for a vehicle comprises a case 1 and a lid (not shown in the attached figures), where the case 1 is formed by a receptacle, which defines a cavity suitable for housing different components of the battery, and the lid (not shown) is arranged to cover the access opening to the cavity defined by the receptacle of the case 1.

The vehicle battery case 1 is formed by a sheet with a lower surface 2 of rectangular shape extending peripherally and in an orthogonal direction, forming four side surfaces 23 with a certain height. At the upper edge of said side surfaces 23 there is provided an outwardly projecting perimeter edge 24 provided with a plurality of holes 5 distributed along said perimeter edge. As can be seen in figure 1, the lower surface 2 of the case 1 has a series of roughnesses 21 and a series of openings. In particular, there is an opening 14 on one side of the bottom surface 2 and in its vicinity there are two inlets provided for receiving two screws 15, one at each inlet, arranged in opposite positions.

In figure 2 below, a detail of one of said protruding portions 6 can be seen on the side of the upper face 3 of the surface 2 of the case 1 for receiving in a through and tight manner a respective fixing screw 15. In said figure 2 the threaded part of the body or stem of the fixing screw 15 has not been shown, although it exists.

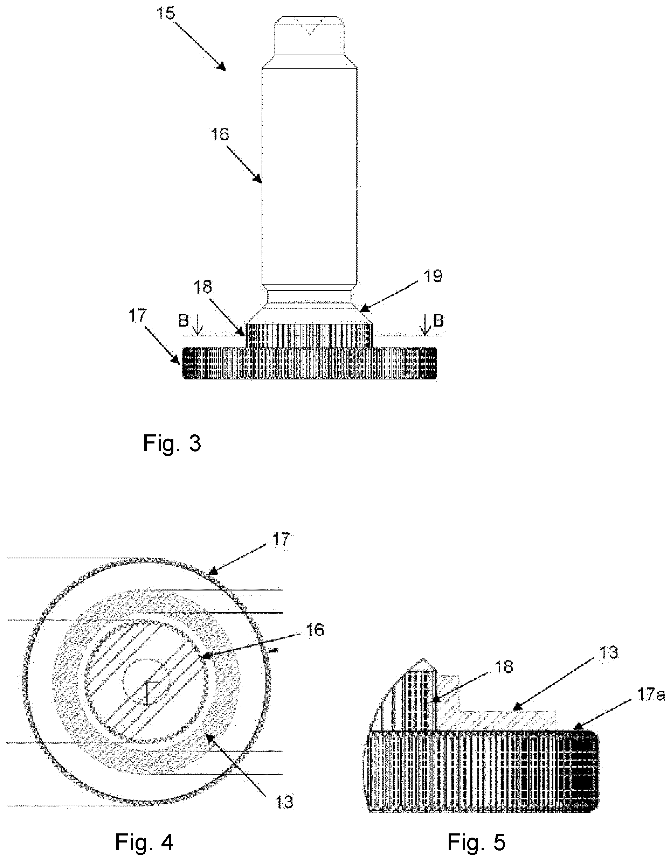

A possible embodiment of the fixing screw 15 of the present invention is shown in the following figures 3 to 5. The screw 15 is formed by an elongate body 16, of cylindrical configuration, extending in a longitudinal direction corresponding to the longitudinal axis of the screw body and having part or all of its outer surface threaded (not shown). Arranged at the lower end of the body 16 is an enlarged head 17 of circular contour provided with a plurality of grooves on its entire outer lateral surface extending in the longitudinal direction in a zigzag manner with a right triangular cross-section; see figure 4. Furthermore, the screw 15 comprises an intermediate portion 18, of cylindrical configuration, arranged at the bottom of the body 16, wherein the grooves extend over the entire lateral surface of the intermediate portion 18 in longitudinal direction in a zigzag manner with a right triangular cross-section, see figure 4. A frustoconical portion 19 is formed between the body 16 of the fixing screw 15 and the enlarged head 17.

Figure 5 shows the adhesive layer 13 arranged on most of the outer surface of the intermediate portion 18 and also on a part of the upper surface 17a of the head 17 corresponding to the area closest to the intermediate portion 18. Figure 4 shows only the horizontal area of the adhesive layer 13 arranged on the upper surface 17a of the head 17 of the screw 15.

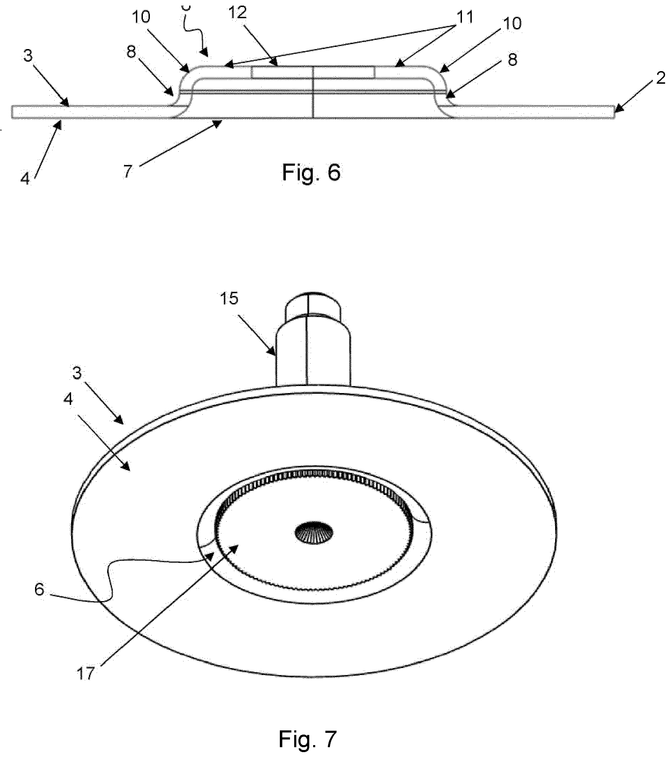

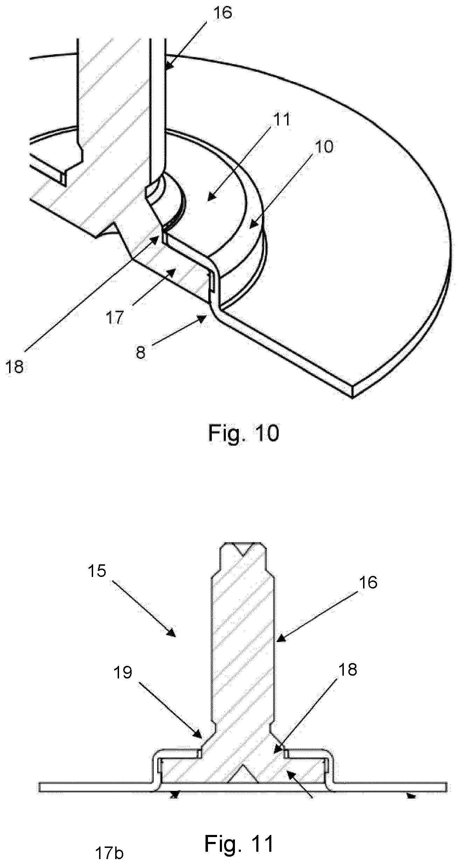

Figures 7 to 12 show different views of the mounted assembly of a part of a surface 2 of a battery case 1 and a fixing screw 15 inserted
in a space provided in said surface 2 of the case 1. In said figures it can be seen that the fixing screw 15 is introduced at the bottom and that the upper surface 17a of the screw 15 abuts inside a protruding portion 6. As can be seen in figures 10 and 11, the lower surface 17b of the screw 15 is flush at the same height as the lower face 4 of the surface 2 of the case 1.

Figure 6 shows the configuration of the protruding portion 6, which extends towards the zone corresponding to the upper surface 3 of the surface 2, which comprises a perimeter wall which extends towards the zone corresponding to the upper surface 3, leaving a lower opening 7 and where the perimeter wall comprises a first ascending zone and a second upper zone 11 which ends in an upper through opening 12 arranged in a central position of the protruding portion 6; and where the upper mouth 12 has a diameter such as to receive, in a tight manner, a part of the intermediate portion 18 of the screw 15.

The first ascending zone of the wall of the projecting portion 6 comprises the following zones:
- a first perimeter transition zone 8, in which there is a change of curvature of the perimeter wall from a direction parallel to the X-Y plane of the surface 2 to a direction Z substantially orthogonal to said X-Y plane, and
- a third perimeter transition zone 10, in which there is a change of curvature of the wall from the end of the first transition zone 8 to a direction parallel to the X-Y plane defining a horizontal wall 11 ending in the upper opening 12.

Figures 10 and 11 show how the fixing screw 15 remains, in its mounting position, in the interior space of said protruding portion 6, in such a way that the majority of the body of the fixing screw 15 is arranged protruding through the upper zone 3 of the case 1, while the
head 17 of the screw 15 abuts against the inner surface 4 of the protruding portion 6 and fixes the upper face 17a of the head 17 to said protruding portion 6 by means of an adhesive 13. As can be seen, the intermediate portion (18) of the fixing screw 15 has a width or diameter 5 slightly less than the diameter of the upper opening 12 of the mouthpiece 6 so that it can pass through it yet be positioned tightly inside it.

Although reference has been made to a specific embodiment of the invention, it will be evident to a person skilled in the art that the screw for a battery case for a vehicle and the case assembly and at least one screw described above are susceptible to numerous variations and modifications, and that all the aforementioned details can be replaced by other technically equivalent details, without departing from the scope of protection defined by the appended claims.

## Claims

1. Screw (15) for a battery case (1) for a vehicle, wherein the screw (15) is suitable to be inserted, in a tight manner, into a space provided in a surface (3) of a battery case (1), wherein the screw (15) comprises:
- an elongate body (16) extending in a longitudinal direction, and
- a head (17) arranged at the lower end of the body (16),
where the screw (15) is configured to be fixed to an external component in or on a surface (3) of the case (1), and where the body (16) is configured to be inserted into the space provided on a surface (3) of a battery case (1) so that the body (16) of the screw (15) is arranged on the upper face of the surface (3) of the case (1) and the head (17) of the screw (15) is on the other lower face of the surface (3) of the case (1), and
wherein the head (17) of the screw (15) is configured to be fixedly attached to the lower face (4) of the surface (3) of the case (1);
**characterized in that** the screw (15) further comprises:
- an intermediate portion (18) arranged at the lower part of the body (16) of the screw (15), wherein the lower part of the intermediate portion (18) contacts the upper part of the head (17) of the screw, and wherein the outer lateral surface of the intermediate portion (18) is configured to contact a part of the inner surface of the space provided in a surface (3) of a case (1); and
wherein the head (17) of the screw (15) is a widened head, of greater width than the intermediate portion (18) and wherein said widened head (17) comprises a plurality of grooves in its outer lateral surface for contacting another space portion of the case (1).

2. Screw (15) according to claim 1, wherein the intermediate portion (18) comprises a plurality of grooves in its outer lateral surface,
said plurality of grooves configured to contact a part of the inner surface of the space provided in a surface (3) of a case (1).

3. Screw (15) according to claim 1 or 2, wherein the intermediate portion (18) has a greater width than the body (16).

4. Screw (15) according to any one of the preceding claims, wherein the intermediate portion (18) has a cylindrical or prismatic configuration.

5. Screw (15) according to any one of the preceding claims, wherein the intermediate portion (18) has a height comprised between 0.5 and 3mm.

6. Screw (15) according to any one of the preceding claims, wherein the plurality of grooves provided on the outer side surface of the intermediate portion (18) extend along the longitudinal direction.

7. Screw (15), according to claim 5, wherein the plurality of grooves of the intermediate portion (18) comprise a plurality of grooves and peaks that are interspersed in a zigzag manner with a triangular cross section.

8. Screw (15) according to any one of the preceding claims, wherein the plurality of grooves provided in the outer lateral surface of the head (17) extend along the longitudinal direction.

9. Screw (15), according to claim 8, wherein the plurality of grooves of the head (17) comprise a plurality of grooves and peaks that are interspersed in a zigzag manner.

10. Screw (15) according to any one of the preceding claims, wherein the widened head (17) has a height comprised between 1.5 and 2.5 times greater than the height of the toothed portion (18).

11. Assembly (1+15) of vehicle battery case (1) and at least one screw (15) defined in any one of claims 1 to 10, wherein the assembly comprises:
- a battery case (1), comprising a surface, provided with an upper face and a lower face opposite the upper face;
- one or more screws (15) defined in any one of the preceding claims, for fixing an external component in or on the upper face (3) of the surface (2)of the battery case (1); and
- attachment means (13) for attaching at least the upper surface of the head (15) of the screw (15), corresponding to the surface that is closest to the elongate body (16) to the lower face (4) of the surface (2) of the case (1);
**characterized in that** the case (1) further comprises:
- at least one protruding portion (6) for the passage of a respective screw (15), where the at least one protruding portion (6) extends towards the area corresponding to the upper surface (3) of the surface (2), where the at least one protruding portion (6) comprises a perimeter wall that extends towards the area corresponding to the upper surface (3) leaving a lower opening (7), and where the perimeter wall comprises a first ascending area and a second upper area (11) that ends in an upper through opening (12) arranged in a central position of the protruding portion (6); and where the upper mouth (12) has a diameter such as to receive, in a tight manner, a part of the intermediate portion (18) of the screw (15), so that the body of the screw (15) is arranged and fixed protruding from the upper area (3) of the case (1) and the head of the screw (15) is against the upper surface (4) of the case (1), the head being fixed to said lower face (4) by attachment means (13).

12. Assembly of a case (1) and at least one screw (15) according to claim 11, wherein the first ascending zone of the wall of the at least one protruding portion (6) comprises the following zones:
- a first perimeter transition zone (8), in which there is a change in curvature of the perimeter wall extending from a direction parallel to the X-Y plane of the sheet surface to a direction Z orthogonal to said X-Y plane,
- optionally, a second central zone wherein at least a portion of said central zone is formed by a wall extending in the orthogonal direction Z, and
- a third perimeter transition zone (10), in which there is a change in curvature of the wall from the end of the first or second transition zone to a direction parallel to the X-Y plane, continuing with a portion of the horizontal wall (11) ending in the upper central opening (11).

13. Assembly of a case (1) and screw (15) assembly according to claim 11 or 12, wherein the perimeter wall (8, 9, 10, 11) of the at least one protruding portion (6) of the surface (2) has the same thickness as the rest of the surface (2) of the case (1).

14. Assembly of a case (1) and screw(s) (15), according to any one of claims 11 to 13, wherein the thickness of the surface (2) of the case (1) and that of the walls of the at least one protruding portion (6) is comprised between 0.5 and 3.5 mm.

15. Assembly of a case (1) and screw(s) (15), according to any one of claims 11 to 13, wherein the surface (2) of the case (1) has a thickness equal to or greater than 1 mm.

16. Assembly of a case (1) and screw(s) (15) according to any one of claims 11 to 14, wherein the surface (2) of the case (1) is a sheet metal and the at least one protruding portion (6) is formed by stamping the sheet metal itself.

17. Assembly of a case (1) and screw(s) (15) according to any one of claims 11 to 16, wherein the diameter of the lower mouth (7) of the at least one protruding portion (6)of the surface (2) of the case (1) is comprised between 6 and 18 mm.

18. Assembly of a case (1) and screw(s) (15) according to any one of claims 11 to 17, wherein the height of the at least one protruding portion (6) of the surface (2) of the case (1) with respect to the upper surface (3) of the sheet (2) is comprised between 1 and 3 mm.

19. Assembly of a case (1) and screw(s) (15) according to any one of claims 11 to 18, wherein the internal surface of the at least one protruding portion (6) is smooth.

20. Assembly of a case (1) and screw(s) (15) according to any one of claims 11 to 19, wherein the attachment means (13) of the upper surface of the head (17) of the screw (15) to a surface of the case (1) is an adhesive material arranged at least on a part of the outer surface of the toothed portion (4) and on a part of the upper surface of the head corresponding to the area closest to the toothed portion (4), where the adhesive (13) is configured to attach the upper surface (3a) of the head (17) to a face of the case (1) with an extraction force such that the attachment is strong enough to maintain the attachment of the parts, but at the same time not too strong to serve as a safety fuse in case of impact.
